# EUROPEAN PATENT APPLICATION

(11) **EP 3 779 282 A1**
(43) Date of publication of application: **17.02.2021**
(21) Application number: 19774197.8
(22) Date of filing: 15.03.2019
(51) Int. Cl.: F23R 3/34, F23R 3/36

(54) **COMBUSTION DEVICE AND GAS TURBINE**

(30) Priority: 28.03.2018 JP 2018062164
(71) Applicant: IHI CORPORATION, Koto-ku, Tokyo 135-8710 (JP)
(72) Inventor: ONISHI Shogo, Tokyo 135-8710 (JP); ITO Shintaro, Tokyo 135-8710 (JP); UCHIDA Masahiro, Tokyo 135-8710 (JP); MIZUTANI Taku, Tokyo 135-8710 (JP); FUJIMORI Toshiro, Tokyo 135-8710 (JP)
(74) Representative: TBK
(86) International application number: PCT/JP2019/010826
(87) International publication number: WO 2019/188409

(57) **Abstract**

A combustion device (C) burns a fuel in a combustion chamber (N) by using combustion air. The device includes a reducing agent injection device which includes an injection port (2n) and injects a predetermined reducing agent from the injection port (2n) toward a region (Kc) having a low oxygen concentration in a flame (K) in the combustion chamber (N), in which the reducing agent injection device changes a distance of the injection port (2n) with respect to the flame (K) in accordance with an injection amount of reducing agent.

## Description

### [Technical Field]

The present disclosure relates to a combustion device and a gas turbine. Priority is claimed on Japanese Patent Application No. 2018-062164, filed on March 28, 2018, the content of which is incorporated herein by reference.

### [Background Art]

Patent Document 1 listed below discloses a combustion device and a gas turbine which burns ammonia as a fuel. That is, in the combustion device and the gas turbine, a natural gas is premixed with ammonia (ammonia for fuel), the mixture is supplied to a combustor, and a combustion exhaust gas for driving a turbine is obtained. In addition, in order to reduce the nitrogen oxides (NOx), a reduction region for reducing the nitrogen oxides (NOx) generated in a combustion region using ammonia is formed on a downstream side in the combustor.

### [Citation List]

### [Patent Document]

[Patent Document 1]
Japanese Unexamined Patent Application, First Publication No. 2016-191507

### [Summary of Invention]

### [Technical Problem]

In order to form a reduction region by a reducing agent, it is necessary to supply the reducing agent to an oxygen-deficient region of a flame. However, in the method described in Patent Document 1, the reducing agent is supplied from an injection hole formed on a peripheral surface of the liner. Accordingly, many reducing agents do not reach an oxygen-deficient region generated at a center of the flame, burns at an outer edge of the flame and generates nitrogen oxides. Therefore, there is a possibility that a reducing effect by the reducing agent cannot be sufficiently exerted. Furthermore, if an injection device of the reducing agent is installed in a state where the injection device can approach the flame, the injection device of the reducing agent is exposed to a high temperature when the reducing agent is not supplied.

The present disclosure is made in consideration of the above-described circumstances, and an object thereof is to reliably supply the reducing agent to the oxygen-deficient region of the combustor and to protect the injection device when the reducing agent is not supplied.

### [Solution to Problem]

In order to achieve the object, in the present disclosure, as a first aspect of a combustion device, there is provided a combustion device which burns a fuel in a combustion chamber by using combustion air, the device including: a reducing agent injection device which includes an injection port and injects a predetermined reducing agent from the injection port toward a region having a low oxygen concentration in a flame in the combustion chamber, in which the reducing agent injection device changes a distance of the injection port with respect to the flame in accordance with an injection amount of reducing agent.

In the present disclosure, as a second aspect of the combustion device, in the first aspect, the reducing agent injection device includes, an injection nozzle of which a tip is the injection port, and a support mechanism which supports the injection nozzle so that the injection nozzle freely protrudes in an axial direction.

In the present disclosure, as a third aspect of the combustion device, in the second aspect, the support mechanism includes a first plate member which is provided in the injection nozzle in a posture orthogonal to the axial direction, a second plate member which is provided in a casing of the combustion chamber so as to face the first plate member, and an elastic member which is provided between the first plate member and the second plate member.

In the present disclosure, as a fourth aspect of the combustion device, in the third aspect, the second plate member is provided hermetically at an end portion of a tubular body provided coaxially with the injection nozzle on an outer periphery of the second plate member and includes an opening through which the injection nozzle is slidably inserted in the axial direction, and the first plate member is hermetically provided at a rear end portion of the injection nozzle and is slidably accommodated in the tubular body.

In the present disclosure, as a fifth aspect of the combustion device, in any one of the first to fourth aspects, a plurality of the reducing agent injection devices are provided in a main flow direction in the combustion chamber, and a distance of the injection port with respect to the flame is changed according to a position in the main flow direction.

In the present disclosure, as a sixth aspect of the combustion device, in any one of the first to fifth aspects, the reducing agent is ammonia.

Further, in the present disclosure, as an aspect of a gas turbine, there is provided a gas turbine including: the combustion device according to any one of the first to sixth aspects.

### [Advantageous Effects of Invention]

According to the present disclosure, a distance between a reducing agent injection device and a flame can be changed, and thus, it is possible to reliably supply a reducing agent to an oxygen-deficient region of the combustor.

### [Brief Description of Drawings]

FIG. 1 is a block diagram showning an overall configuration of a gas turbine according to an embodiment of the present disclosure.
FIG. 2 is a cross-sectional view showning a configuration of a combustor according to an embodiment of the present disclosure.
FIG. 3 is a cross-sectional view showning an ammonia injection nozzle and a support mechanism according to an embodiment of the present disclosure.

### [Description of Embodiments]

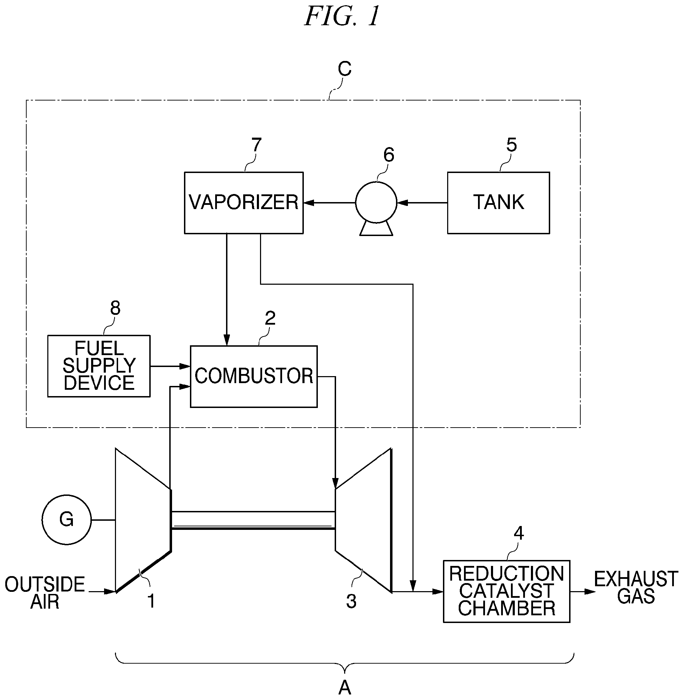

Hereinafter, an embodiment of the present disclosure will be described with reference to the drawings. As shown in FIG. 1, a gas turbine A according to the present embodiment includes a compressor 1, a combustor 2, a turbine 3, a reduction catalyst chamber 4, a tank 5, a pump 6, a vaporizer 7, and a fuel supply device 8. Further, among these components, the combustor 2, the tank 5, the pump 6, the vaporizer 7, and the fuel supply device 8 constitute a combustion device C in the present embodiment. The gas turbine A is a driving source of a generator G and burns a predetermined fuel to generate rotary power.

The compressor 1 compresses air taken from outside air to a predetermined pressure to generate compressed air. The compressor 1 supplies the compressed air to the combustor 2 mainly as combustion air.

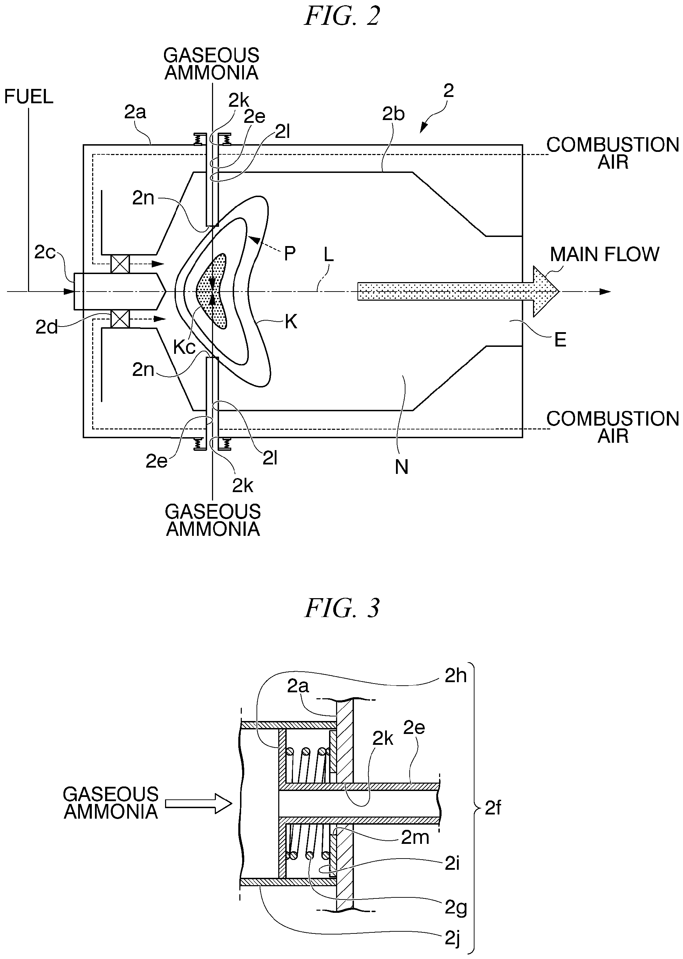

The combustor 2 burns a fuel using the compressed air as an oxidant to generate a combustion gas, and supplies the combustion gas to the turbine 3. As shown in FIG. 2, the combustor 2 includes a casing 2a, a liner 2b, a fuel nozzle 2c, a rectifier 2d, a plurality of ammonia injection nozzles 2e, and a support mechanism 2f. Moreover, the tank 5, the pump 6, the vaporizer 7, and the plurality of ammonia injection nozzles 2e constitute a reducing agent injection device according to the present disclosure.

The casing 2a is a substantially cylindrical container which accommodates the liner 2b. The fuel nozzle 2c and the rectifier 2d are attached to one end of the casing 2a, and an exhaust port E is formed on the other end thereof. The liner 2b is a tubular body provided substantially coaxially with the casing 2a, and the internal space of the liner 2b is a combustion chamber N. A center axis L of the liner 2b shown in FIG. 2 is substantially coaxial with a center axis of the casing 2a. However, the center axis L of the liner 2b may not be substantially coaxial with the center axis of the casing 2a. Moreover, a direction of a central axis L of the liner 2b shown in FIG. 2 is a direction (main flow direction) of a main flow in the combustion chamber N. In addition, cooling air is supplied to the liner 2b along an inner peripheral surface of the liner 2b, and a cooling air layer is formed near the inner peripheral surface of the liner 2b.

The fuel nozzle 2c is provided on the center axis L of the liner 2b on one end of the casing 2a and is a fuel injection nozzle which injects the fuel into the combustion chamber N. The rectifier 2d is provided at one end of the casing 2a in an annular shape around the fuel nozzle 2c. The rectifier 2d is provided between an outer peripheral surface of the fuel nozzle 2c and an inner peripheral surface of the liner 2b. The rectifier 2d supplies combustion air in a direction from one end of the combustion chamber N toward the exhaust port E and forms a swirling flow S of the combustion air around the central axis L of the liner 2b.

The plurality of ammonia injection nozzles 2e are nozzles inserted into the liner 2b from the casing 2a and are provided at predetermined angles around the center axis L of the liner 2b, that is, around the flame K. Each of the ammonia injection nozzles 2e has a cylindrical shape of which a rear end portion has a flange (a first plate portion 2h to be described later), and an injection port 2n is formed at a tip of the ammonia injection nozzle 2e. The ammonia injection nozzle 2e has the tip inserted from a peripheral surface of the liner 2b and is provided radially inward in the liner 2b. That is, the ammonia injection nozzle 2e extends radially inward from an inner peripheral surface of the liner 2b in a state where the tip is inserted into the internal space (combustion chamber N) of the liner 2b. In addition, the ammonia injection nozzle 2e is inserted into the liner 2b from an opening 2k formed in the casing 2a and an opening 21 formed in the liner 2b, and the rear end portion of the ammonia injection nozzle 2e is supported by the support mechanism 2f. Moreover, the opening 2k is a through hole penetrating a peripheral wall of the casing 2a, and the opening 21 is a through hole penetrating a peripheral wall of the liner 2b. Accordingly, a protrusion amount of ammonia injection nozzle 2e from the inner peripheral surface of the liner 2b can be changed. That is, the reducing agent injection device is configured to change a distance (a position in an injection direction of the injection port 2n of the ammonia injection nozzle 2e) of the injection port 2n of the ammonia injection nozzle 2e with respect to the flame K according to an injection amount of gaseous ammonia. Moreover, in a case where the protrusion amount of ammonia injection nozzle 2e is the minimum, the ammonia injection nozzle 2e is in a state of protruding radially inward from the cooling air layer formed along the inner peripheral surface of the liner 2b. The ammonia injection nozzle 2e is a nozzle that injects the gaseous ammonia toward the center of the combustor 2 from the inner peripheral surface of the liner 2b and is slidable in a nozzle axis direction by a support mechanism 2f.

As shown in FIG. 3, the support mechanism 2f includes a spring 2g (elastic member), the first plate portion 2h (first plate), a second plate portion 2i (second plate), and a tubular body 2j. The spring 2g is provided between the first plate 2h and the second plate 2i. The spring 2g is provided between the first plate portion 2h and the second plate portion 2i disposed in parallel to each other. One end of the spring 2g abuts on the first plate portion 2h and the other end thereof abuts on the second plate portion 2i. The spring 2g biases the ammonia injection nozzle 2e radially outward of the casing 2a. The support mechanism 2f is compressed by the first plate portion 2h being pressed radially inward due to an increase in the injection amount of ammonia. As a result, the protrusion amount of ammonia injection nozzle 2e increases.

The first plate portion 2h is provided at an upstream end portion (a base end portion and a rear end portion) of the ammonia injection nozzle 2e and is a collar-shaped member which is formed so as to spread from the rear end portion toward a radially outer side of the ammonia injection nozzle 2e. The first plate portion 2h is provided in a posture orthogonal to an axis of the ammonia injection nozzle 2e and is hermetically attached to the ammonia injection nozzle 2e. The first plate portion 2h may be formed integrally with the ammonia injection nozzle 2e. Such a first plate portion 2h is disposed to face the second plate portion 2i and is in a state where a distance between the first plate portion 2h and the second plate portion 2i can be changed.

The second plate portion 2i is a plate-shaped member fixed to an outer wall of the casing 2a. Moreover, the second plate portion 2i includes an opening 2m into which the ammonia injection nozzle 2e is inserted. In addition, the opening 2m means a through-hole penetrating the second plate portion 2i. The second plate portion 2i abuts on the other end of the spring 2g, and functions as a washer for the spring 2g.

The tubular body 2j is connected to the vaporizer 7 for supplying gaseous ammonia and forms a flow path for guiding the gaseous ammonia. The first plate portion 2h is slidably accommodated in the tubular body 2j, and a second plate portion 2i is attached to a downstream end portion of the tubular body 2j. Moreover, the second plate portion 2i may be hermetically attached to the downstream end portion of the tubular body 2j.

The flame K is a region having a relatively low oxygen concentration in the combustion chamber N. However, a central portion Kc of the flame K is a region having a lowest oxygen concentration in the flame K. As shown in FIG. 2, the plurality of ammonia injection nozzles 2e inject the gaseous ammonia toward the central portion Kc of the flame K in a main flow direction, that is, the region (oxygen-deficient region) having the lowest oxygen concentration. Moreover, as shown in FIG. 2, the central portion Kc of the flame K is not a single point but an area having a predetermined spread.

The turbine 3 generates rotary power using the combustion gas as a driving gas. The turbine 3 is shaft-coupled to the compressor 1 and the generator G as shown in the drawings, and rotationally drives the compressor 1 and the generator G by the rotary power of the turbine 3. The turbine 3 exhausts the combustion gas from which the power is recovered toward the reduction catalyst chamber 4. The reduction catalyst chamber 4 is filled with a reduction catalyst, and reduces nitrogen oxides (NOx) contained in the combustion gas to nitrogen (N2).

The tank 5 is a fuel tank which stores a predetermined amount of liquid ammonia and supplies the liquid ammonia to the pump 6. The pump 6 is a fuel pump which pressurizes the liquid ammonia supplied from the tank 5 to a predetermined pressure and supplies the liquid ammonia to the vaporizer 7.

The vaporizer 7 vaporizes the liquid ammonia supplied from the pump 6 to generate gaseous ammonia. The vaporizer 7 supplies the gaseous ammonia as a reducing agent immediately before the combustor 2 and the reduction catalyst chamber 4. In addition, the above-described reduction catalyst chamber 4 performs reduction processing on the nitrogen oxides (NOx) by cooperation between the reduction catalyst accommodated therein and the reducing agent.

Next, operations of the gas turbine A and the combustion device C will be described in detail.

In the gas turbine A and the combustion device C, the pump 6 is operated, and thus, the liquid ammonia is supplied from the tank 5 to the vaporizer 7. Accordingly, the liquid ammonia is vaporized by the vaporizer 7 to generate the gaseous ammonia. Moreover, the gaseous ammonia is supplied immediately before each ammonia injection nozzle 2e of the combustor 2 and the reduction catalyst chamber 4. The fuel is supplied from the fuel supply device 8 to the combustor 2 and is injected into the combustion chamber N from the fuel nozzle 2c.

The compressor 1 is operated, and thus, the compressed air is supplied to the rectifier 2d of the combustor 2 as the combustion air. The combustion air is injected by the combustor 2 in the direction of the center axis L of the liner 2b as the swirling flow S swirling around the center axis L of the liner 2b.

The combustion air is initially injected from the rectifier 2d of the combustor 2 toward the center axis L of the liner 2b. In this case, due to a centrifugal force caused by the swirling, the combustion air gradually spreads in a direction orthogonal to the central axis L, that is, gradually spreads toward the liner 2b (the inner peripheral surface of the liner 2b) located on a side of the central axis L. Further, by being connected to the flow of the combustion air, the fuel injected from the fuel nozzle 2c gradually spreads in a direction orthogonal to the central axis L similarly to the combustion air. Then, the fuel and the combustion air flowing in the combustion chamber N are mixed with each other, and a flame K is formed in the combustion chamber N.

This flame K is formed around the central axis L of the liner 2b. However, due to the above-described flow of the fuel and the combustion air, as shown in FIG2, a tip of the flame K in the direction of the central axis L is closer to the exhaust port E (forward) as a distance from the central axis L increases. Since the ammonia injection nozzle 2e is directed to the oxygen-deficient region generated at the central portion Kc of the flame K, the ammonia injection nozzle 2e directly injects the gaseous ammonia to the central portion Kc of the flame K in the direction (side) orthogonal to the center axis L.

That is, in the present embodiment, the ammonia injection nozzle 2e directly injects the gaseous ammonia from the ammonia injection nozzle 2e to the central portion Kc of the flame K having the lowest oxygen concentration in the combustor 2. Accordingly, it is possible to prevent the gaseous ammonia from reacting at an outer edge of the flame K, to reliably supply the gaseous ammonia to the central portion Kc (oxygen-deficient region) of the flame K, and to efficiently react the gaseous ammonia in the central portion Kc (oxygen-deficient region) of the flame K. Therefore, it is possible to improve efficiency of reducing the nitrogen oxides (NOx) by the gaseous ammonia as compared with the related art.

Moreover, a supply amount of gaseous ammonia increases, the first plate portion 2h is pressed against the casing 2a by the pressure of the gaseous ammonia passing through the tubular body 2j. Then, the support mechanism 2f is compressed, and the first plate portion 2h moves in a direction approaching the casing 2a. As a result, the ammonia injection nozzle 2e is inserted radially inward of the liner 2b, and the injection port 2n of the ammonia injection nozzle 2e is closer to the central portion Kc of the flame K. As the supply amount of gaseous ammonia increases, cooling effect of the ammonia injection nozzle 2e by the gaseous ammonia increases. For this reason, when the supply amount of gaseous ammonia increases, it is possible to increase the protrusion amount of ammonia injection nozzle 2e and bring the ammonia injection nozzle 2e closer to the flame K. That is, since the cooling effect of the ammonia injection nozzle 2e increases and the ammonia injection nozzle 2e approaches the flame K, it is possible to supply the gaseous ammonia to the central portion Kc (oxygen-deficient region) of the flame K while the ammonia injection nozzle 2e is prevented from being high in temperature. In a case where the supply amount of gaseous ammonia is small, the cooling effect of the ammonia injection nozzle 2e by the gaseous ammonia is small. In this case, by reducing the protrusion amount of the ammonia injection nozzle 2e, the distance from the flame K can increase and thus, the temperature of the ammonia injection nozzle 2e can be prevented from being high. That is, as the supply amount of gaseous ammonia decreases, the cooling effect of the ammonia injection nozzle 2e by the gaseous ammonia decreases. For this reason, when the supply amount of gaseous ammonia decreases, it is possible to reduce the protrusion amount of ammonia injection nozzle 2e and move the ammonia injection nozzle 2e away from the flame K. That is, the cooling effect of the ammonia injection nozzle 2e decreases, but the ammonia injection nozzle 2e moves away from the flame K. Therefore, when the gaseous ammonia is not supplied, the ammonia injection nozzle 2e is sufficiently separated from the flame K, and thus, the temperature of the ammonia injection nozzle 2e can be prevented from being high.

Moreover, the present disclosure is not limited to the embodiment, and for example, the following modification examples can be considered.
(1) In the embodiment, for example, the gas turbine A may be a combustion device such as a jet engine or a boiler.
(2) In the present disclosure, the plurality of ammonia injection nozzles 2e can be provided in the main flow direction (the main flow direction in the combustion chamber N). In this case, the protrusion amounts of the plurality of ammonia injection nozzles 2e are changed according to the positions in the main flow direction, and thus, the gaseous ammonia can be more reliably supplied to the central portion Kc of the flame K. For example, if the protrusion amount of ammonia injection nozzle 2e disposed on a downstream side in the main flow direction is larger than the protrusion amount of ammonia injection nozzle 2e disposed on an upstream side in the main flow direction, the ammonia injection nozzle 2e disposed on the downstream side in the main flow direction can be disposed at a position closer to the central portion Kc of the flame K.
(3) In the embodiment, the spring 2g is provided as the elastic member of the support mechanism 2f. However, the present disclosure is not limited to this. For example, a hydraulic oil may be supplied to or discharged from a portion between the first plate portion 2h and the second plate portion 2i such that the ammonia injection nozzle 2e is movable.

### [Industrial Applicability]

According to the present disclosure, a distance between a reducing agent injection device and a flame can be changed, and thus, it is possible to reliably supply a reducing agent to an oxygen-deficient region of the combustor.

### [Reference Signs List]

1: compressor
2: combustor
2a: casing
2b: liner
2c: fuel nozzle
2d: rectifier
2e: ammonia injection nozzle
2f: support mechanism
2g: spring
2h: first plate portion
2i: second plate portion
2j: tubular body
2k, 21, 2m: opening (through hole)
2n: injection port
3: turbine
4: reduction catalyst chamber
5: tank
6: pump
7: vaporizer
8: fuel supply device
A: gas turbine
C: combustion device
E: exhaust port
G: generator
K: flame
Kc: central portion

## Claims

1. A combustion device which burns a fuel in a combustion chamber by using combustion air, the device comprising:
a reducing agent injection device which includes an injection port and injects a predetermined reducing agent from the injection port toward a region having a low oxygen concentration in a flame in the combustion chamber,
wherein the reducing agent injection device changes a distance of the injection port with respect to the flame in accordance with an injection amount of the reducing agent.

2. The combustion device according to claim 1,
wherein the reducing agent injection device includes,
an injection nozzle of which a tip is the injection port, and
a support mechanism which supports the injection nozzle so that the injection nozzle freely protrudes in an axial direction.

3. The combustion device according to claim 2,
wherein the support mechanism includes
a first plate member which is provided in the injection nozzle in a posture orthogonal to the axial direction,
a second plate member which is provided in a casing of the combustion chamber so as to face the first plate member, and
an elastic member which is provided between the first plate member and the second plate member.

4. The combustion device according to claim 3,
wherein the second plate member is provided hermetically at an end portion of a tubular body provided coaxially with the injection nozzle on an outer periphery of the second plate member and includes an opening through which the injection nozzle is slidably inserted in the axial direction, and
wherein the first plate member is hermetically provided at a rear end portion of the injection nozzle and is slidably accommodated in the tubular body.

5. The combustion according to any one of claims 1 to 4,
wherein a plurality of the reducing agent injection devices are provided in a main flow direction in the combustion chamber, and a distance of the injection port with respect to the flame is changed in accordance with a position in the main flow direction.

6. The combustion device according to any one of claims 1 to 5,
wherein the reducing agent is ammonia.

7. A gas turbine comprising:
the combustion device according to any one of claims 1 to 6.
